# EUROPEAN PATENT APPLICATION

(11) **EP 3 952 439 A1**
(43) Date of publication of application: **09.02.2022**
(21) Application number: 20189211.4
(22) Date of filing: 03.08.2020
(51) Int. Cl.: H04W 36/00, H04W 36/30, H04W 36/32

(54) **METHOD, APPARATUS AND SYSTEM FOR DEFINING AND SETTING PARAMETERS IN CELLULAR MOBILE COMMUNICATION NETWORKS**

(71) Applicant: Telefónica Germany GmbH & Co. OHG, 80992 München (DE)
(72) Inventor: Müllner, Robert, 81479 München (DE); Seitz, Alexander, 81247 München (DE)
(74) Representative: Herrmann, Uwe

(57) **Abstract**

The present invention describes a method for defining and setting parameters in a cellular mobile communication network, in particular for setting parameters being used for performing and/or triggering a handover or cell re-selection routine, wherein the method comprises the following steps: detecting at least one characteristic information of a user equipment, i.e. UE, classifying the UE on basis of said at least one characteristic information into a specific one of a plurality of user profiles, and setting specific parameters in the cellular mobile communication network individually for said UE on basis of its user profile, preferably setting UE specific parameters which are used for performing and/or triggering a handover or cell re-selection routine and/or radio resource management on basis of the UE's user profile.

## Description

The present invention relates to the field of mobile telecommunication networks, and more particularly to a method, apparatus and system for a subscriber-behaviour dependent network parameterisation.

This invention is directed to an individual parameterisation of a cellular mobile telecommunication network based on the subscribers' behaviour, wherein the network may use patterns to classify the user's behaviour into different environments and assigns individual parameter settings to each one of a plurality of environments. Artificial intelligence can be used to evaluate the success of the applied parameterisation for future parameter adaptations. The present invention introduces the transition from a cell specific parameterisation of mobile telecommunication networks forming prior art to a subscriber-behaviour based parameterisation.

Furthermore, the invention is directed to a mobile communication network, base station, controller, and user equipment adapted to carry out the invented method.

Seamless mobility is one of the key aspects in 3rd Generation Partnership Project (3GPP) mobile networks. In idle mode, the User Equipment (UE) camps on a cell and re-selection to another cell is triggered based on radio channel conditions or traffic load. In dedicated mode, a handover is executed to keep the connection active during the subscriber's motion between different cells of the mobile communication network.

Today's 3GPP mobile networks consist of multiple technologies and allow the subscriber access to each of these technologies. The focus of the Global System for Mobile Communications (GSM) standard was set to speech services. This second generation (2G) technology allows service-continuity while the subscriber moves from one cell to another cell. In GSM networks, also packet-switched data services were introduced based on the General Packet Radio Service (GPRS) and Enhanced GPRS (E-GPRS). With growing demand for data services, the next generation Universal Mobile Telecommunications System (UMTS) was gradually rolled out. With the increase of the peak data rate in this third generation (3G) technology, more and more mobile data applications emerged. The fourth generation (4G) Long Term Evolution (LTE) / LTE Advanced (LTE-A) introduced even higher data rates simultaneously accessible for a high number of users in the cell. Networks of the fifth generation (5G) are further enhanced to provide even higher data rates for many users and to handle simultaneously a huge amount of mobile terminals transmitting only a low amount of data. Shorter delays in 5G networks allow the introduction of new services with real-time demands.

In a network consisting of several technologies, UEs are preferentially served by the newest network technology unless UE capabilities, load balancing aspects, or specific low data rate applications request the allocation in other technologies. During the step-by-step rollout of a new technology, this latest technology is already deployed in parts of the network, while the radio coverage of other parts, e.g. in neighbouring cells, is still provided by older technologies. Furthermore, not all UEs in the network support the latest technology, therefore today's networks typically consist of a plurality of network technologies.

### Stationary user behaviour

Stationary subscribers usually profit from being connected to the latest technology that is supported by their UE and the handover to another network technology shall preferentially only be executed if the subscriber moves. However, due to fluctuations of the radio channel conditions and traffic load, a change of the cell or technology might also be necessary in stationary operation. Examples are temporary shadowing of the short-range 5G coverage by a lorry or the cell breathing effect in UMTS networks which means that with increasing traffic load in the UMTS cell also the intra-cell interference increases causing a reduction of the quality of received radio signals. If the signal quality falls below a predefined Received Energy per Chip divided by the Power Density in the Band (Ec/No) threshold, a handover is triggered, e.g. an inter-RAT handover to another technology.

Different technologies use various frequency bands and radio propagation aspects depending on the frequency play an important role for covering areas or losing coverage in an area of the network.

### Moving subscribers

Fast moving subscribers have completely different requirements. Because the connection to the serving cell has to be kept during the whole handover procedure, it is beneficial to trigger cell re-selection and handover for fast moving subscribers earlier than for slow moving or stationary users for avoiding a drop of the connection.

### Idle-mode RAT mobility

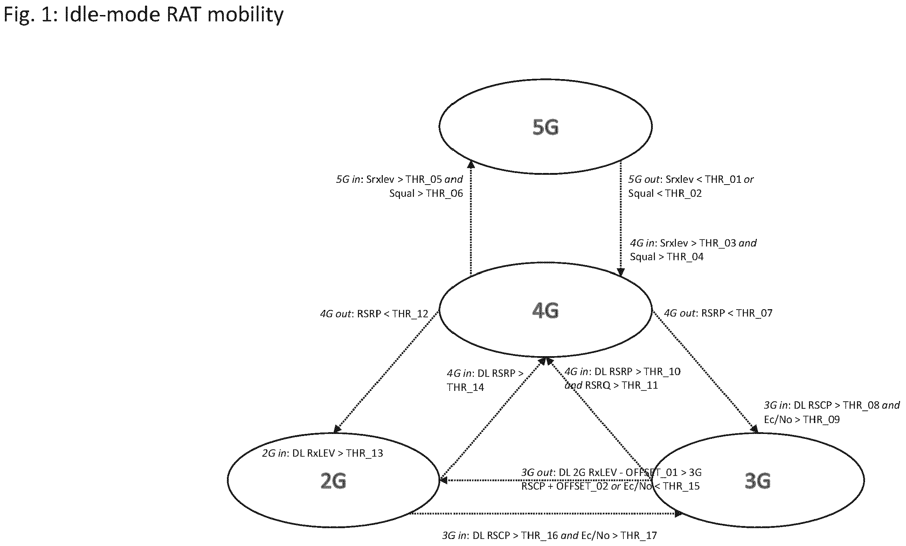

Fig. 1 shows an example for the idle mode transitions between the 3GPP Radio Access Technologies (RAT) 5G, 4G, 3G, and 2G. After switching on the UE, an initial cell selection procedure is executed taking into consideration the level of the received signals from different base stations. If the downlink signal level of a 5G cell exceeds a minimum threshold, the UE camps on the 5G cell. Otherwise the next lower technology is selected if the receive signal strength fulfils its minimum requirements. While the UE camps on a cell, the receive level and quality of signals from other cells are monitored and cell re-selection from 5G to 4G is triggered, if the cell selection receive (RX) level value (Srxlev) [dBm] falls below the threshold THR_01 or the cell selection quality value (Squal) [dB] falls below the threshold THR_02. In addition to the outgoing criteria, also for the incoming side specific minimum requirements have to be fulfilled, e.g. Srxlev [dBm] > THR_03 and Squal [dB] > THR_04 for cell re-selection to 4G. Cell re-selection back to 5G is possible if the 5G cell has higher priority than the 4G cell and Srxlev [dBm] of the signal of the 5G cell exceeds THR_05 and Squal [dB] exceeds THR_06.

Details of the 5G cell re-selection procedure are described in 3GPP TS 38.304, "Technical Specification Group Radio Access Network; NR; User Equipment (UE) procedures in Idle mode and RRC Inactive state", 2018, http://www.3gpp.org.

Cell re-selection from 4G to 3G is triggered, if the Reference Signal Received Power (RSRP) of the downlink signal falls below THR_07 and cell re-selection to another 4G cell is not executed, e.g. due to missing adjacent 4G coverage. If in addition the Received Signal Code Power (RSCP) of the downlink signal of the 3G cell is higher than THR_08 and the Ec/No is higher than THR_09, cell re-selection to 3G is executed.

Cell re-selection from 3G to 4G is triggered if the downlink RSRP of the 4G signal exceeds the threshold THR_10 and its Reference Signal Received Quality (RSRQ) exceeds the threshold THR_11. If the radio channel conditions of the 4G cell become worse and coverage of other 5G, 4G, or 3G cells is not provided, cell re-selection to 2G is triggered if the RSRP of the serving 4G cell is lower than THR_12. Cell re-selection from 4G to 2G is executed if the downlink receive level (RxLEV) of the 2G signal is higher than THR_13. In the other direction from 2G to 4G, cell re-selection is executed if the receive level of the 4G signal (RSRP) is higher than THR_14.

Cell re-selection from 3G to 2G is triggered, if the downlink 2G RxLEV - OFFSET_01 is higher than the 3G RSCP + OFFSET_02 or the 3G Ec/No falls below the threshold THR_15. Cell re-selection from 2G back to 3G is triggered if the 3G RSCP is higher than THR_16 and the 3G Ec/No exceeds the threshold THR_17.

### Cell re-selection problems in prior art procedures

The following example represents problems in state-of-the-art cell re-selection procedures between the two technologies 3G and 2G: A subscriber moves towards the cell border of the 3G cell and there are no adjacent cells of higher priority technologies available. The radio channel conditions of the serving 3G cell become worse and cell re-selection to 2G is triggered assuming that sufficient 2G coverage is provided. If the UE moving towards the cell border is kept in this situation too long in the 3G cell and cell re-selection to 2G is triggered at a low receive level and receive quality threshold, the subscriber still camps on the 3G cell while radio channel conditions are already poor. In this example the subscriber sets up a call and this call is automatically setup in the technology the UE camps in idle mode. In this case, the call is setup at the coverage border of the 3G cell. In poor radio channel conditions, neighbouring cells of the same technology are searched first and the receive level and quality of adjacent 3G cells are measured. This procedure takes time, while the subscriber continuously moves towards the cell border and the radio channel conditions of the serving 3G cell become worse. If the criteria for intra-RAT handover are not fulfilled, inter-RAT cells are measured, which again takes time while the subscriber leaves the 3G coverage area. Successful decoding of handover messages becomes more difficult in critical radio channel conditions and retransmissions might be necessary, which even extends the duration of the handover procedure. For successful execution of the inter-RAT handover, the signalling connection to the serving 3G cell has to be kept continuously until the handover procedure is finalised and the call is allocated on a 2G channel. In this situation the probability of a drop of the connection is high and it is the scope of this invention to improve this situation and increase the reliability of the mobile network.

### Connected-mode RAT mobility

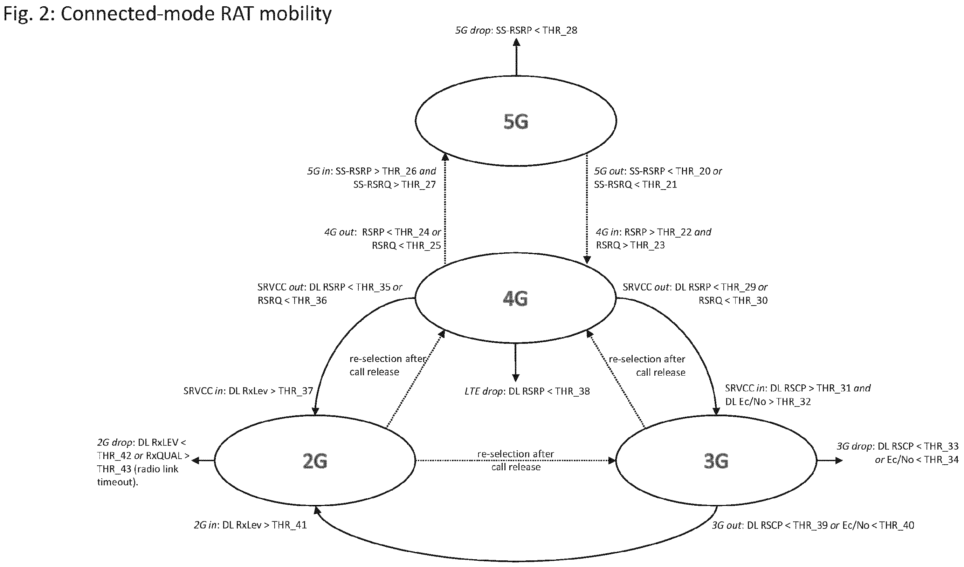

Fig. 2 shows an example for the connected mode transitions between the different RATs and their thresholds that are typically configured differently from idle mode thresholds.

Details for 5G are described in 3GPP TS 38.215, "Technical Specification Group Radio Access Network; NR; Physical layer measurements", 2018, http://www.3gpp.org and 3GPP TS 38.331, "Technical Specification Group Radio Access Network; NR; Radio Resource Control (RRC) protocol specification", 2018, http://www.3gpp.org.

In connected mode the UE leaves the 5G cell if the minimum receive signal conditions are violated, i.e. the Synchronization Signal Reference Signal Received Power (SS-RSRP) falls below THR_20 or the Synchronization Signal Reference Signal Received Quality (SS-RSRQ) falls below THR_21 and the minimum receive signal requirements for 4G are fulfilled, i.e. the 4G RSRP exceeds THR_22 and the 4G RSRQ is higher than THR_23. In the opposite direction, the UE leaves the 4G cell if either the RSRP is lower than threshold THR_24 or the RSRQ falls below THR_25. In addition, the incoming criteria for the 5G cell have to be fulfilled, i.e. SS-RSRP is higher than threshold THR_26 and SS-RSRQ exceeds threshold THR_27. The 5G connection drops if no better suited cell is available and the radio channel conditions of the serving 5G cell are poor, in Fig. 2 represented by the condition SS-RSRP < THR_28.

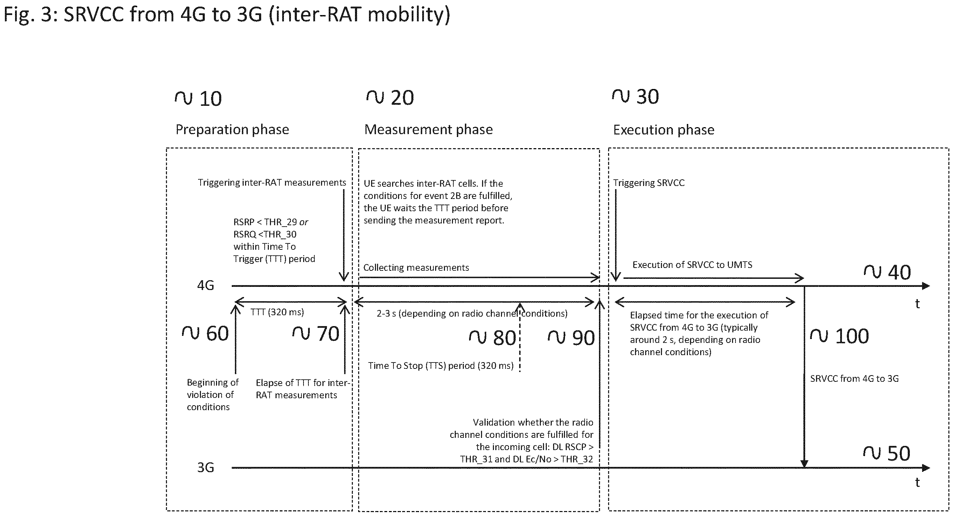

Fig. 2 includes the RAT change from 4G to 3G via Single Radio Voice Call Continuity (SRVCC), for which typical durations are further described in Fig. 3 to emphasise the length of time of this procedure and the impact of the mobile speed in state-of-the-art procedures. SRVCC from 4G to 3G is triggered if the downlink RSRP is lower than THR_29 or the downlink RSRQ is lower than THR_30. It is executed if the RSCP of the 3G downlink signal exceeds THR_31 and its Ec/No is higher than THR_32. In 3G the UE can be handed over to other 3G cells (intra-RAT) or to cells of other technologies (inter-RAT). Handover from 3G to 2G is shown in Fig. 2, whereas inter-RAT handover to 4G is not shown. Instead, cell re-selection to 4G after release of the call in 3G is shown. If no suited adjacent cells are available and the radio channel conditions in the 3G network become worse, the connection drops, which is represented in Fig. 2 by the conditions of downlink RSCP < THR_33 or Ec/No < THR_34.

SRVCC from 4G to the 2G network is triggered, if the RSRP of the downlink 4G signal falls below THR_35 or its RSRQ is lower than THR_36. The SRVCC is executed if the incoming criterion is fulfilled in the 2G target cell, i.e. the downlink RxLev exceeds THR_37. If no suited target cells are found, the call drops in 4G if the minimum radio channel conditions cannot be reached, represented by RSRP < THR_38.

The handover from 3G to 2G is triggered if the RSCP of the downlink 3G signal is lower than THR_39 or its Ec/No falls below THR_40. The handover is executed if the incoming criterion of the 2G cell is fulfilled, i.e. if the RxLev of the downlink 2G signal is higher than THR_41. In 2G a call drop is executed by radio link timeout, represented in a simplified manner in Fig. 2 by the criteria of downlink RxLEV < THR_42 or receive quality (RxQUAL) higher than THR_43. Higher RxQUAL values represent worse quality.

### Handover problems in prior art procedures

The simplified representation of the SRVCC procedure from 4G to 3G in Fig. 3 is divided into three parts, the preparation phase 10, the measurement phase 20 and the execution phase 30. The same time scales 40 and 50 are used for the 4G and 3G technologies. This example describes the procedures executed by the network and UE when the subscriber leaves the coverage area of the 4G cell and SRVCC to 3G is necessary for continuity of the speech call. Instance 60 marks the beginning of violation of the minimum criteria for keeping the call in 4G as defined in Fig. 2. If either receive level or receive quality criteria in the serving 4G cell are violated throughout the period defined as Time To Trigger (TTT), inter-RAT measurements are triggered after expiry of TTT at instance 70. During the measurement phase 20, the UE searches neighbouring inter-RAT cells. If the conditions for event 2B (an abbreviation for an UMTS handover event in which the estimated quality of the currently used frequency is below a certain threshold and the estimated quality of a non-used frequency is above a certain threshold) are fulfilled, the UE waits the TTT period before sending the measurement report. In addition, a Time To Stop (TTS) timer is started. If the radio channel conditions in the serving cell improve before expiry of this timer at instance 80, the inter-RAT measurements are stopped. In this example, TTT and TTS are configured to 320 ms. Depending on the prevailing radio channel conditions, this measurement phase 20 typically takes between 2 s and 3 s. At the end of this phase at instance 90 it is verified, whether the target cell fulfils the minimum radio channel conditions: The 3G downlink (DL) receive level RSCP must be higher than THR_31 and the quality (Ec/No) of the 3G DL signal sent from the 3G base station (NodeB) must exceed THR_32. The execution phase 30 typically takes around two seconds, depending on the radio channel conditions and the necessity of retransmissions. During the whole SRVCC procedure of typically five to six seconds, the signalling connection to the serving 4G cell has to be kept. At instance 100 after execution of the SRVCC, the speech call continues in the 3G network.

A handover procedure is applied for call continuity between the 3G and 2G network. For a subscriber moving towards the border of the 3G cell, the radio channel conditions typically become worse. Various thresholds are defined and the UE first starts intra-frequency and, if configured, inter-frequency measurements for cells of the same technology (3G) and finally inter-RAT measurements for cells of other technologies. After that, the handover preparation phase starts and the handover will be executed. A subscriber driving in a train or on a motorway covers a considerable long distance during the duration of the handover procedure, which takes approximately 5 to 10 s, while the UE continuously moves away from areas of good 3G coverage. During this procedure the connection to the serving 3G cell has to be maintained, otherwise the connection drops.

### Parameterisation for stationary, slow and fast moving subscribers

In comparison to a stationary or slow moving subscriber, the handover procedure for a fast moving subscriber has to be initiated earlier to successfully keep the necessary signalling connection to the serving cell. In addition, the cell re-selection procedure for UEs in idle mode has to be initiated earlier for fast moving UEs compared to slow moving or stationary UEs. If the same thresholds are used in both cases, either cell re-selection is triggered unnecessarily early for a slow moving UE, i.e. the radio channel conditions of the serving technology are still high enough, or the cell re-selection procedure is initiated too late for a fast moving subscriber. In the latter case, the fast moving subscriber leaving the coverage area of the serving technology has already reached considerably poor radio channel conditions while still camping on the cell. If the UE switches under these radio channel conditions from idle to connected mode, e.g. for the setup of a call, the currently camping technology is used for allocating a traffic channel or bearer, respectively. The call setup procedure typically takes several seconds while in this example the subscriber continuously moves towards the coverage border of the serving technology. Once the call is established, better-suited cells are searched but measuring and processing the measurements takes time, during which the UE is tied to the currently serving technology while the subscriber further moves in a poorly covered area. The risk of a drop of the connection is high.

In contrast, for stationary users a change of the RAT (Radio Access Technology) has often disadvantages due to the interruption time and location and routing area update in the new technology. If the mobility thresholds are set too high - as required for fast moving subscribers - the intrinsic fluctuations of the radio channel conditions can unnecessarily provoke a change of the RAT for stationary or slow moving subscribers. A change back to the previous technology causes again interruptions or is prevented for avoiding ping-pong effects. While a fast change of the RAT is required to prevent the connection of a fast moving subscriber from dropping, a higher inertia is beneficial for stationary or slow moving mobiles.

Thus, it is the general concept of the present invention to apply different radio channel related thresholds and triggering times for fast and slow moving subscribers to obtain high performance and reliability in mobile networks.

### Prior art

In the prior art, different approaches were made by using different filtering and triggering conditions based on the speed of the UE. A speed sensitive handover method is described in EP 0 589 278 or US 5,457,810.

In this speed-dependent handover method for hierarchic cell structures, a finding is made to whether mobile stations have traversed a radio coverage domain of a micro cell within a specific time interval. When the mobile stations are still in the radio coverage domain with respect to the micro cell after the time interval, a handover for the appertaining mobile stations into the micro cell is requested.

Another approach is to classify cells of the mobile network according to the most beneficial requirements for the majority of UEs expected to be present in the cell. However, when performing cell classification, this takes effect on all UEs registered in the cell.

For example, a cell that covers a high-speed railway line can also cover a village with slow moving or stationary users. A cell that covers a motorway can also provide the coverage layer for a filling station or motorway restaurant. In all these mixed scenarios, a decision has to be taken to define the cell either as fast-speed or slow-speed environment. A medium-speed environment might imply a compromise but is neither well suited for fast moving subscribers nor for slow moving subscribers.

For each speed environment, a specific setting is defined for the considered parameter, which can be further separated according to the deployment thus offering multiple combinations. However, in all cases the same value is used for all UEs in the cell.

### Solved problem by the present invention

It is an objective of the present invention to overcome the above mentioned drawbacks. This may be reached by using the method of claim 1 allowing configuring and automatically assigning individual values for parameters to an UE, irrespectively of the settings of these parameters used by other UEs in the same cell. Further, this objective may be achieved by automatically identifying the speed and deployment environment on a per user basis and definition of proper and individual parameter values based on the identified environment combination representing the behaviour of the user. Preferably, this invention proposes an auto-optimisation procedure of the defined parameter settings using artificial intelligence. Preferable embodiments are given by the depending claims.

The present invention proposes a method for defining and setting parameters in a cellular mobile communication network, in particular for setting parameters being used for performing and/or triggering a handover or cell re-selection routine, wherein the method comprises the following steps detecting at least one characteristic information of a user equipment, i.e. UE, classifying the UE on basis of said at least one characteristic information into a specific one of a plurality of user profiles, and setting specific parameters in the cellular mobile communication network individually for said UE on basis of its user profile, preferably setting UE specific parameters which are used for performing and/or triggering a handover or cell re-selection routine on basis of the UE's user profile.

Thus, it is the underlying principle of the present invention to apply the parameterisation of the network on a per UE-basis, thereby allocating each UE in a cell a specific set of network parameters, which preferably may have an effect on a handover timing or a handover execution. As a result, it is possible to execute a handover for fast moving UEs earlier than for slow moving UEs despite the fact that both UEs are located in the same cell.

The present inventors have realised that the conventional parameterisation made on a per cell basis contains a lot of drawbacks which might be alleviated or overcome by applying a network parameterisation which is made on a per UE basis. This may take the subscriber's behaviour into account which may differ significantly between a plurality of subscribers.

It is an object of the present invention to improve the reliability of connections in mobile networks, especially for high reliability applications like autonomous driving or interruption-free services in the sense of Industry 4.0 / Internet of Things (IoT). Avoiding of drops does not only provide continuity of services, it also avoids connection re-establishments that are necessary after a drop and thus offers positive impact on data throughput. The proposed method improves the operability and performance of the mobile network as it directs the UEs in idle and in connected mode to cells that are best suited according to the subscriber's behaviour.

The proposed method is furthermore a transition from a cell-specific to a user-behaviour specific parameterisation, which is beneficial especially for slicing in 5G networks.

The underlying idea of the present invention, advantages and features become apparent by discussing the figures in the subsequent description passage, the figures showing:
- Fig. 1:: an abstract scheme for an idle-mode RAT mobility,
- Fig. 2:: an abstract scheme for a connected-mode RAT mobility,
- Fig. 3:: an overview for performing Single Radio Voice Call Continuity from 4G to 3G,
- Figs. 4-6:: the different contribution of slow and fast fading components,
- Fig. 7:: a path loss model for different scenarios,
- Fig. 8:: timing advance profiles for UEs with different speeds,
- Fig. 9:: receive levels for different scenarios,
- Fig. 10:: threshold definition for a combination of subscriber specific environments,
- Fig. 11:: receive level and handover thresholds for different scenarios, and
- Fig. 12:: a general overview of the functional architecture of the underlying idea.

### A) Identification of the UE's speed environment

According to a preferred modification of the present invention, detecting the characteristic information of a UE comprises at least the estimation of the UE's speed by performing at least one of the following steps:
- detecting a fading profile of the signal received by a base station, i.e. BS, in uplink and/or of the signal received by a UE in downlink,
- detecting the Doppler shift occurring when sending signals between the BS and the UE or vice versa,
- detecting the number of cell changes made by the UE in an immediately preceding period of time, preferably wherein a cell change is considered, i.e. a cell re-selection procedure during idle mode of a UE and/or a handover during connected mode of the UE,
- detecting positioning data of the UE in order to estimate the actual speed of the UE, wherein the positioning data are obtained by a positioning system, e.g. by GPS, Galileo, Beidou or GLONASS, and/or are obtained by triangulation technologies evaluating the propagation delays of a signal between a UE and several base stations, and
- detecting a fixed definition of the speed of the UE defined during an installation and configuration procedure of the UE, or wireless module, respectively.

For the person skilled in the art, it is clear that the term "base station" encompasses all types of base stations irrespective of their radio access technology. Thus, a base station embraces a NodeB, an eNodeB, a gNB (next generation NodeB for 5G) etc.

One or a combination of the following criteria shall be applied to estimate the speed of the UE and classify it in one of the speed environments.

### i) Fading profile analysis:

The signal received in uplink (UL) direction by the antenna of the base station and in DL direction by the antenna of the UE is, among other effects, attenuated and distorted by fast and slow fading. Slow fading effects are mainly caused by shadowing e.g. from buildings. Fast fading effects are mainly caused by multipath propagation and Doppler shifts. The signal attenuation depends on the carrier frequency. A fast moving subscriber passes a building faster and has typically another slow fading profile than a stationary or slow moving subscriber, because the temporal shadowing of the signal by the obstacle lasts for a shorter time. In addition, also the form of the fast fading profile is impacted by the speed of the UE.The course of the fading profile shall be analysed for both links, in UL direction measured by the receiver of the base station and in DL direction measured by the receiver of the UE. Its shape shall be separated into classes defining the speed environment of the UE, e.g. fast, medium, and slow. A further class can be defined for stationary UEs.

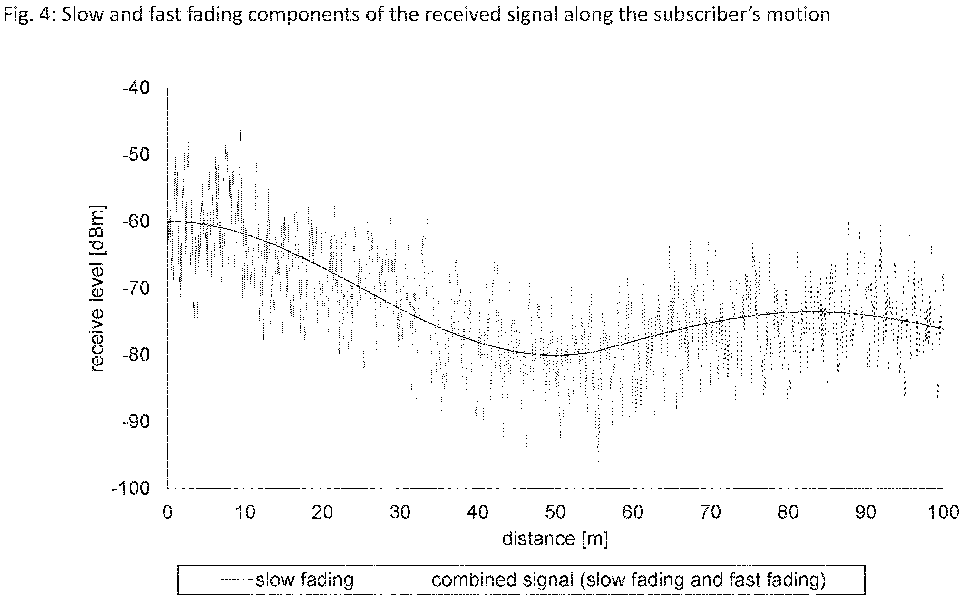

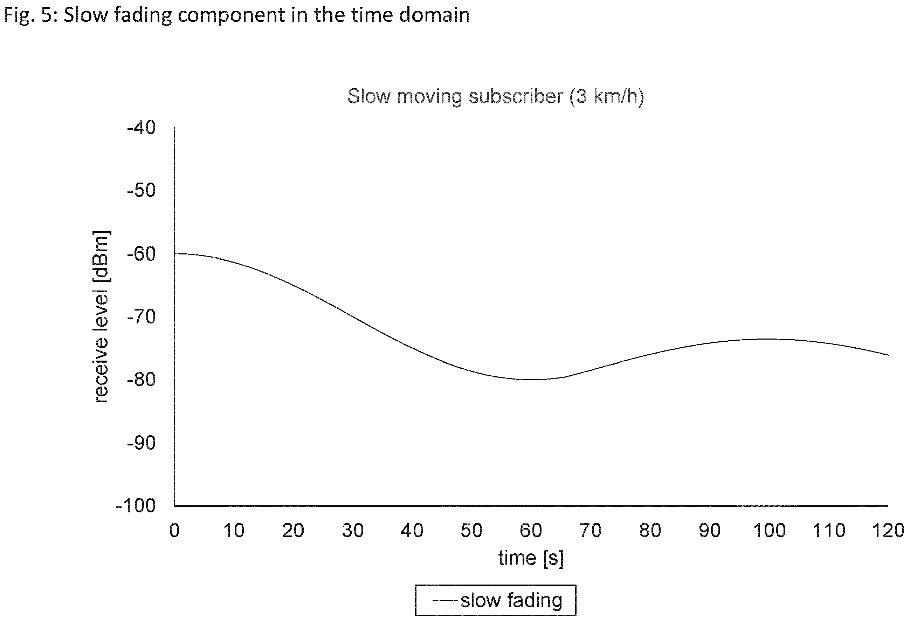

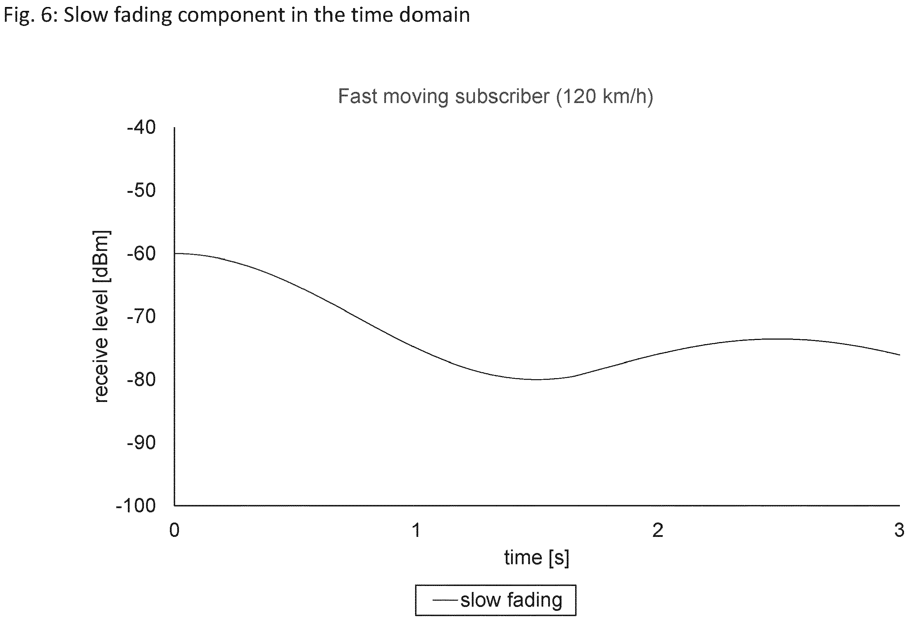

An example for a fading profile along the user's motion is shown by the dotted curve in Fig. 4. The abscissa covers a movement range of 100 m and the ordinate represents the receive level of the reference signal, which is a superposition of the solid curve representing the slow fading and the variations in the dotted curve representing the fast fading component. The slow fading component can be estimated from the combined signal by using a low-pass filter to remove the fast varying changes caused by fast fading. For the slow fading component, the receive level is now represented as a function of time for a slow moving subscriber at a speed of 3 km/h (Fig. 5) and for a fast moving subscriber at 120 km/h (Fig. 6). It takes 3 s for the fast moving subscriber to pass the distance of 100 m, while this way is passed by the slow moving subscriber within 120 s. For a defined measurement interval, the variations of the slow fading signal are different for different speeds and shall be used for classification of the user into speed environment classes.

### ii) Analysis of the Doppler shift:

The frequency of the received electromagnetic wave depends on the emitted frequency and on the relative speed between emitter and receiver. If the emitter moves away from the receiver, the maxima of the emitted electromagnetic wave arrive with delay at the receiver thus the wavelength becomes longer (redshift). If the emitter approaches the receiver, the wavelength of the received signal is shorter than that of the emitted electromagnetic wave (blueshift). The difference between emitted and received wavelength depends on the relative speed between emitter and receiver. The receiving entity has information about the carrier frequency and shall use this information to detect the Doppler shift and calculate the relative speed of the UE.

The calculated speed corresponds to the radial speed, whereas tangential speeds cannot be detected by analysing the Doppler shift. Therefore, this method shall only be used in combination with other methods to estimate the speed of the UE.

### iii) Number of cell changes:

The amount of cell re-selection procedures (idle mode) and handovers (connected mode) per time unit executed by the considered UE shall be used as further criterion for classifying the current user behaviour into speed environments. Preferentially the period of the past five to ten minutes shall be used for classification. This period is long enough to detect handovers of fast moving subscribers.

If the amount of executed cell changes per time unit is equal or lower than a first threshold, this criterion shall classify the actual behaviour of the subscriber into the speed environment 1, e.g. termed as slow. If the amount of executed cell changes per time unit exceeds this first threshold, the user's current behaviour is classified as speed environment 2, e.g. termed medium. If the amount of executed cell changes per time unit exceeds a second threshold, the current user behaviour shall be classified as speed environment 3, e.g. fast-speed environment. A filtering process shall be used and the filter shall be initialised with a value corresponding to the medium-speed environment.

In a further embodiment of this invention, the amount of detected cell re-selection and handover procedures shall be correlated with radio network planning tools. This combination allows to set separate thresholds for the detected number of cell changes in small urban cells and large rural cells.
For evaluation of the cell changes, the cell identity of the previous serving cell and the target cell shall be synchronised with maps and network planning tools to obtain additional indication of the user's speed environment. If both cells cover a railway line, the current classification of the user into the fast-speed environment is further consolidated.

### iv) Analysis of positioning data:

Geographical information obtained via the Global Positioning System (GPS), Galileo, Beidou or GLONASS or other positioning systems shall be evaluated and correlated with time stamps of the measurements. The current speed of the UE shall be estimated by dividing the geographical difference by the time difference between two measurement points.

Alternatively, the position of the UE shall be determined via triangulation technologies that evaluate the difference of the propagation delays of a signal between several base stations and the UE, e.g. by Enhanced Observed Time Difference (E-OTD) or between the UE and several base stations, e.g. by Time of Arrival (TOA). In combination with the time between two positioning procedures, the speed of the UE shall be estimated by dividing distance by time.

### v) Fixed definition of the speed of the UE:

For specific applications, the speed of the UE is known during the installation and configuration procedure. An example is a power meter with 3GPP radio interface to report the power consumption as part of the Machine to Machine (M2M) communication or Internet of Things (IoT) and Smart Grid applications. The installed radio modules are not moved and shall be classified as stationary UEs, which shall either be defined as a separate speed environment class or mapped onto the slow-speed environment class.

Users might continuously change their speed, e.g. the UE in a car that stops at traffic lights. A further class can be defined for users frequently changing the identified patterns of the speed environment and separate values shall be defined for these users.

After estimating the UE's speed, the UE can be classified into one of a plurality of predefined speed environments, preferably wherein the UE is classified between at least two of the following speed environments of fast, medium, slow and/or static.

### B) Classification of location environments

According to another (supplemental) beneficial modification of the invention, detecting the characteristic information of a UE comprises the estimation of the UE's location environment by performing at least one of the following steps:
- detecting a change of the path loss during a preceding period of time between a signal connection of UE (user equipment) and BS (base station) or vice versa,
- detecting a change of the timing advance during a preceding period of time between a signal connection of UE and BS or vice versa, and
- detecting a change of the receive level during a preceding period of time between a signal connection of UE and BS or vice versa.

When estimating the UE's location environment, the UE can be classified into one of a plurality of predefined location environments, preferably wherein the UE is classified between at least two of the following location environments of indoor, outdoor, car and/or train.

Also location environments have different requirements with respect to cell re-selection and handover thresholds. A separation shall be done according to indoor, outdoor, train, and car environments. Some of these location environments are linked to speed environments, e.g. the indoor environment relates to stationary or slow moving subscribers, whereas train and car environments typically relate to the fast-speed environment. For the outdoor environment, a unique assignment to one specific speed environment is not possible.

A combination of the following criteria shall be used to classify the user's current environment into one of the location environment classes:

### i) Change of the Path Loss (PL):

The path loss [dB] can be calculated on receiver side as the difference between the emitted reference signal [dBm] with known power and the strength of the received signal [dBm]. The LTE UL power control (PC) algorithm uses the estimated path loss in DL direction for calculating its UL power setting and is specified in 3GPP TS 36.213, "Technical Specification Group Radio Access Network; Evolved Universal Terrestrial Radio Access (E-UTRA); Physical layer procedures", 2013, http://www.3gpp.org. The path loss as function of time typically varies due to changes in the multipath propagation or temporal shadowing effects, e.g. temporary obstacles between the base station and UE, but its fluctuations typically do not exceed a specific range for stationary indoor users. In contrast, higher variations occur for moving subscribers in the outdoor environment.

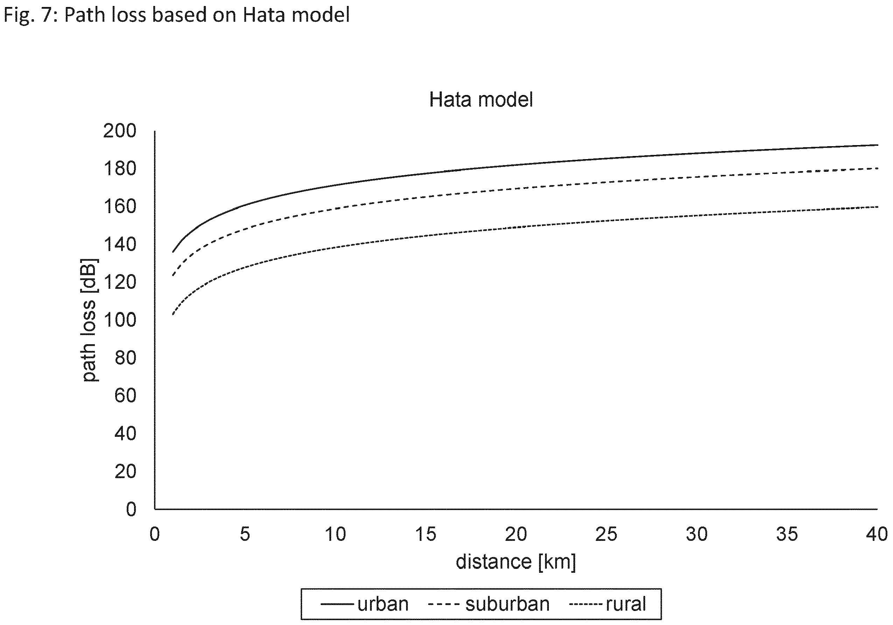

Fig. 7 shows the path loss in the Hata model as a function of the distance for an urban, suburban and rural deployment scenario.

### ii) Change of the Timing Advance (TA):

The TA provides information about the distance between the UE and the base station. It is typically constant for indoor users, while it changes in the course of time for moving outdoor subscribers. For subscribers in trains or cars connected to an outdoor base station, the change of the TA within a specific period is typically higher than for slow moving outdoor subscribers. The change of the TA value per time period shall be used for classification of the user into one of the location environments. It is important to note that a tangential movement is not reflected in the TA. In a further embodiment of this invention, the ratio between PL and TA shall be calculated for each measurement interval on a per user basis to extend its applicability. The course of this ratio as a function of time shall be used for classifying the user's current behaviour into indoor, outdoor, train, or car environments.

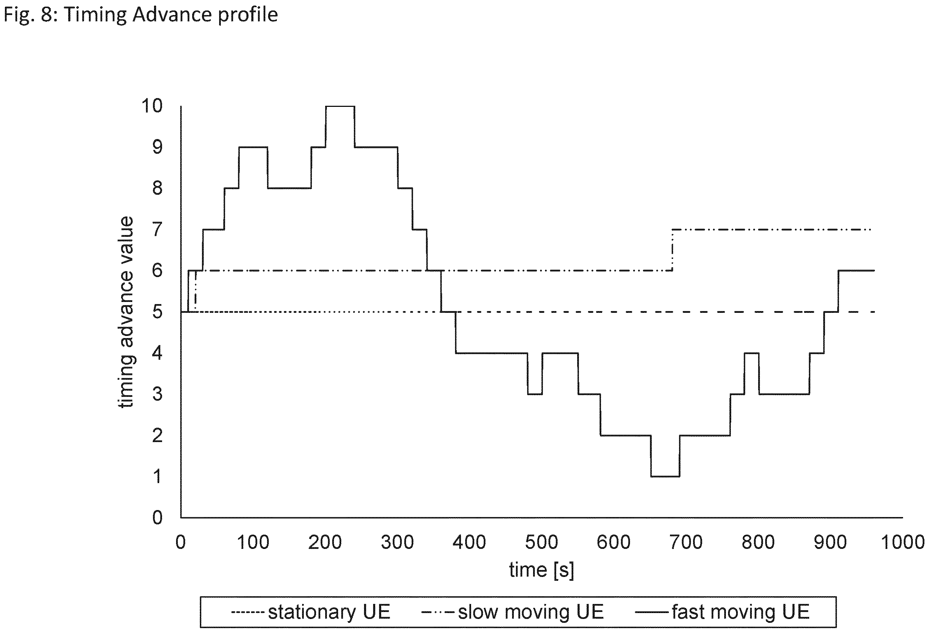

Fig. 8 shows an example for the course of the TA value for a stationary, a slow moving UE at a speed of 3 km/h, and a fast moving UE at a speed of 120 km/h. With a higher resolution of the TA classes, changes in the TA values can be detected in a shorter time and a moving subscriber can earlier be distinguished from a stationary user.

### iii) Changes of the receive level:

Attenuation and penetration loss are typically high for indoor users and smaller for the usage in cars, whereas low attenuation is often observed for outdoor scenarios. Attenuation depends among others on the path loss between the base station and UE, material of walls, and metallisation of windows. In an urban environment, an indoor user located in the vicinity of the base station might have higher receive level than an outdoor subscriber at the cell border in a rural environment. Thus the changes of the receive level shall be considered in the algorithm rather than absolute values. A high receive level with small changes is an indication for an outdoor environment.

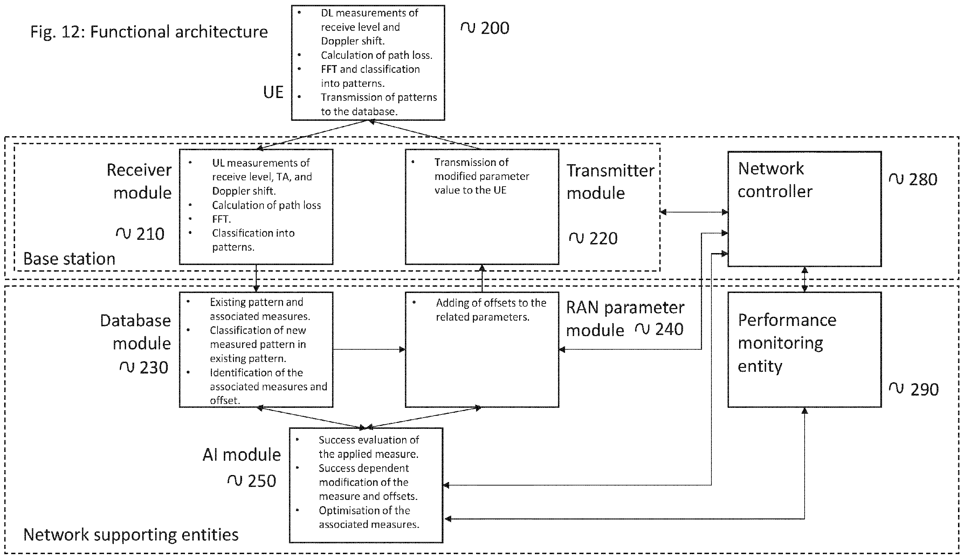

As power control has impact on the receive level, absolute and relative changes of the receive level shall be considered in combination with the PC commands. The LTE UL PC algorithm specified in 3GPP TS 36.213, "Technical Specification Group Radio Access Network; Evolved Universal Terrestrial Radio Access (E-UTRA); Physical layer procedures", 2013, http://www.3gpp.org, is based on a combination of an open-loop (OL) and closed-loop (CL) scheme. As long as there is no PC command received from the Evolved NodeB (eNodeB), the UE exclusively performs OL-PC based on PL estimates, broadcast system parameters and dedicated signalling. Whenever the UE receives a CL-PC command from eNodeB, the UE has to correct its transmission power if necessary (cf. R. Mullner, C.F. Ball, M. Boussif, J. Lienhart, P. Hric, H. Winkler, K. Kremnitzer and R. Kronlachner, "Enhancing uplink performance in UTRAN LTE networks by load adaptive power control", European Transactions on Telecommunications, 2010; 21:1-10. 2010 John Wiley & Sons, Ltd. DOI: 10.1002/ett. 1426, http://www3.interscience.wiley.com/ journal/123536371/abstract.). In one embodiment of this invention, the sequence of the commanded power corrections shall be used in combination with the receive level measurements for classification of the user's current behaviour into one of the location environment classes. PC commands for the uplink direction are sent from the base station to the UE and thus known by the network. Power corrections in DL direction are executed by the base station and also known by the network. This information shall be transferred to the processors for the procedures described in this invention and shown in the functional architecture in Fig. 12.

Propagation models e.g. Lee, Okumura-Hata, or COST-231-HATA differentiate between urban, suburban, and rural deployments. The selected deployment scenario is applied for the whole cell, i.e. a user specific differentiation, which is the objective of this invention, is not done.

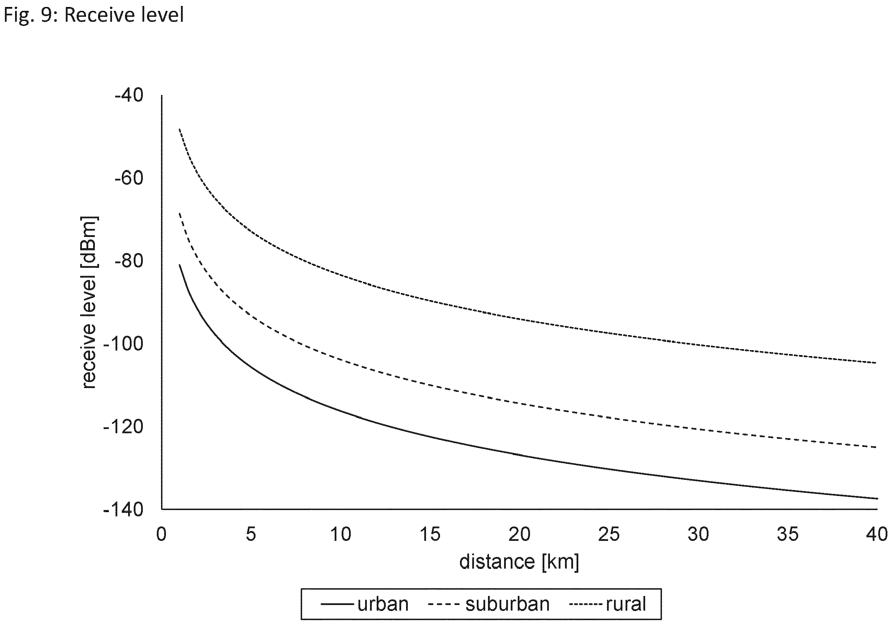

An example for the receive level as a function of the distance for the deployment scenarios urban, suburban and rural is shown in Fig. 9. This diagram is based on typical values for the link budget and path loss using the Hata model.

A further classification is related to the hardware and software deployed in the network. A separation into different classes shall be done e.g. according to the availability and active operation of Mast Head Amplifiers (MHA). If a base station is equipped with a MHA, the signal received at the antenna is amplified to compensate the subsequent signal attenuation due to cable loss between the antenna and receiver module of the base station. In most cases the uplink is the limiting direction in the link budget and a cell change at MHA sites can be triggered later compared to cells without MHA. Note that this deployment characteristic is identical for all subscribers in the cell. Therefore, hardware and software related deployment aspects are only mentioned here for a further separation of the parameter settings, but they are not further considered, as these aspects are not user specific characteristics.

### C) Using (Fast) Fourier Transform for the classification into patterns

According to another aspect of the present invention, a Fourier Transformation, preferably a Fast Fourier Transformation, is applied to each of a detected fading profile signal, a detected Doppler shift signal, a detected path loss signal and/or a detected timing advance signal in order to use the characteristic shape of the respective Fourier-transformed signal for classifying the user's current behaviour into speed environment classes and location environment classes.

Further, for classifying the user's current behaviour, patterns are stored supporting an identification of the corresponding speed environment and/or location environment, wherein preferably the stored patterns are associated with specific values for setting parameters of the network for said UE.

In one advantageous modification of this invention, the classification of the time signals of fading, Doppler shift, PL (path loss), TA (timing advance), and receive level into patterns shall be done by using the (Fast) Fourier Transform (FFT). The FFT is an algorithm that efficiently calculates the Discrete Fourier Transform (DFT), which allows to segment a digital signal into its frequency components and to analyse it in the frequency domain. The DFT is thus a frequency domain representation of the original input sequence.

Its characteristic shape shall be used to classify the user's current behaviour into speed- and location-environment classes.

### D) Classification into user profiles

The invention further proposes that detecting the characteristic information of a UE comprises the estimation of the UE's data usage profile preferably by using the Quality of Service (QoS) attribute Traffic Class or the Quality of Service Class Identifier (QCI), respectively.

When estimating the UE's data usage profile, the UE can be classified into one of a plurality of predefined data user profiles, preferably wherein the UE is classified between at least two of the following location data usage profiles of conversational, streaming, interactive and/or background or its QCI class.

The measurements described in section A) and B) and post-processing measures described in section C) shall be used to classify a user's current behaviour into classes. In the following description, three classes are considered with four and three elements, respectively. The inventive procedure, however, is not limited to this number of classes and elements.
- Location environments: {indoor; outdoor; train; car}
- Speed environments: {slow; medium; fast}
- Data usage profile: {conversational; streaming; interactive; background} or the relevant QCI.

The data usage profile shall use but is not limited to the elements defined in 3GPP TS 23.107 for the Quality of Service (QoS) attribute Traffic Class.

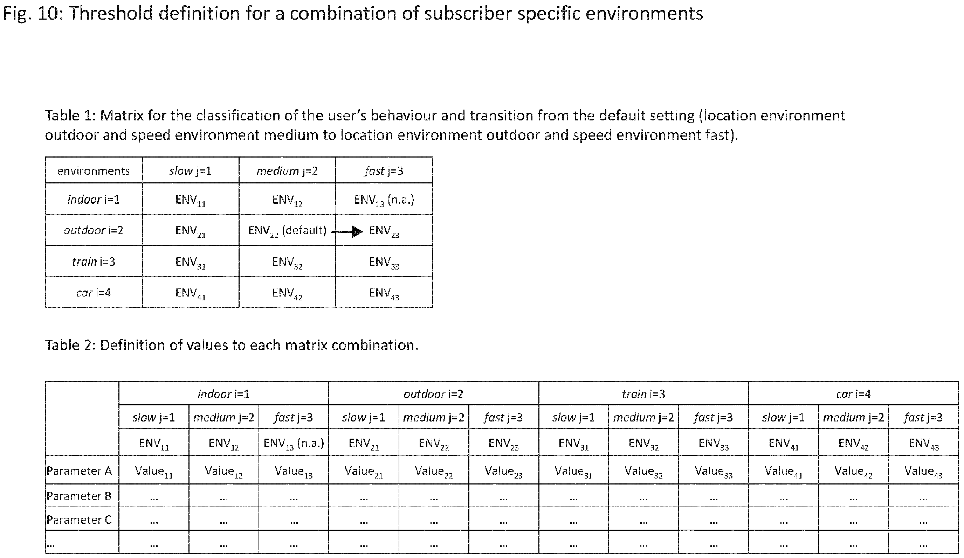

The first two subscriber profiles - location environment and speed environment - can be considered separately from the data usage profile. The following description focuses on the first two profiles:
In this step a 4x3 matrix is generated and each user is assigned into one of the matrix elements. For the initialisation a default value is used, e.g. the outdoor location environment and medium speed environment. During the user's motion, the assigned matrix element can be changed, e.g. from location environment outdoor and speed environment medium to location environment outdoor and speed environment fast. Note that specific combinations of these environment classes are not useful, e.g. the combination location environment indoor and speed environment fast. This combination is marked as not applicable (n.a.) in Table 1 of Fig. 10.

### E) Measures to be executed based on the user specific behaviour

### User behaviour specific parameterisation

For each combination of user specific environments, a specific value shall be defined. This applies to all environment dependent parameters, e.g. cell re-selection and handover thresholds. Table 2 in Fig. 10 shows an example for four different location environments i = 1 ... 4, each of them subdivided into three speed environments j = 1 ... 3. The example shown in Table 2 refers to mobility thresholds of the 3G network. Parameter A represents for example the receive level based inter-frequency threshold for Event 2D (an abbreviation for an UMTS handover event) to trigger inter-frequency measurements. Parameter B is the inter-frequency measurement time and parameter C is the receive quality based inter-RAT threshold for the Event 2F to stop inter-RAT measurements.

With this separation, it becomes possible to use different thresholds for slow and fast moving subscribers. Inter-frequency and inter-RAT handovers can be triggered earlier for fast moving subscribers by setting the thresholds defined by value23, value33, and value43 for the fast-speed environment of the outdoor, train, and car location environments higher than the thresholds defined by value21/22, value31/32, and value41/42 for the slow and medium-speed environments.

The benefit is that stationary indoor users can be kept for a longer time in the 5G or 4G network, while fast moving subscribers are earlier moved to other technologies for preventing the connection from dropping. Keeping the connection for stationary users as long as possible in the 5G/4G network also reduces ping-pong handovers.

Pedestrians often suffer from rapid field drops when turning around the corner. The user-behaviour specific setting shall also be used to immediately hand over the call to another cell, i.e. to immediately execute inter-RAT handover to the coverage layer provided by another technology instead of searching first for suited cells in the same radio technology. This is beneficial especially for high carrier-frequency capacity cells in 5G/4G networks. In contrast, other settings shall be used for fast moving subscribers. This functionality allows to fulfil the objectives of this invention.

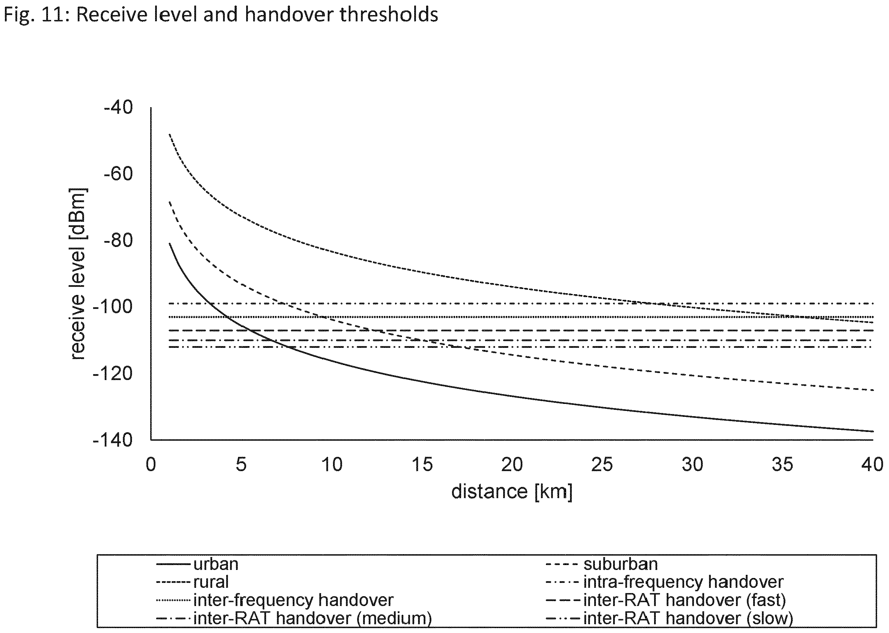

Fig. 11 shows an example for inter-frequency and inter-RAT handover thresholds configured for different speed environments according to the present invention in relation to the receive level of the propagation scenarios from Fig. 9. Speed environments and location environments of this invention are applied and inter-RAT handover thresholds are set to a higher value for the fast-speed environment compared to the slow-speed environment. These thresholds are individually adapted.

### Transmission of user-specific parameter settings to the nodes of the network

On network side, mobility thresholds are used by the algorithms implemented in the controllers and base stations. The dynamic modification of the parameters on network side shall be done via network supporting entities and Operation and Maintenance (O&M) tools, further specified in section F and Fig. 12.

A user-behaviour adaptive parameterisation can be implemented in the Radio Access Network (RAN) only and does not necessarily require changes of the 3GPP standard.

### Transmission of user-specific parameter settings to the UE

Mobility thresholds to be used by the UE are usually transmitted via System Information Broadcast (SIB) messages. Individual settings can also be sent to the UE via dedicated messages. In the considered example of the 3G mobility thresholds for cell re-selection and handover, the UMTS Terrestrial Radio Access Network (UTRAN) Mobility Information can be sent to the UE via a dedicated Radio Resource Control (RRC) message.

This process or alternative procedures shall be used to send the user behaviour specific parameter setting to the UE. It furthermore allows a dynamic change of the parameter settings whenever the user changes its behaviour, e.g. a user leaving the house and changing from stationary operation to the slow, medium, and finally fast-speed environment.

### Data usage profile specific parameterisation

The data usage profile consists of the elements conversational, streaming, interactive, and background. The 2G and 3G network has knowledge about the service type from the QoS attribute Traffic Class. In 4G and 5G networks the QoS Class Identifier (QCI) provides information about the service type.

A UE with an ongoing video transmission as conversational or streaming service or service of the respective QCI class shall be kept longer time in the higher network technology than an interactive or background service. Also in mobility scenarios, the 4G technology in a typical network configuration provides higher throughput than the next lower network technology 3G. For interactive and background services, maintenance of the throughput requirements is less severe and a handover to other technologies shall be triggered earlier.

### User-behaviour specific QoS settings

A user-behaviour specific separation of parameters for cell re-selection and handover are the most relevant case. Also for other parameters, such as QoS settings, a user-behaviour specific separation is beneficial. For example, a fast moving subscriber with an ongoing video transmission crosses large areas of the cell and moves to the cell border, before a handover to the neighbouring cell is executed. For initiating a video transmission, the UE sends a bearer request to the network and the core network maps the relevant QCI settings. It is the scope of this invention to use and assign a higher bandwidth to subscribers of the fast-speed environment than to stationary or slow-speed environment users.

### Performance maintenance during temporary traffic load increase

At festivals the visitors generate additional traffic. They share the available cell resources with the subscribers living in this area. To maintain a specific performance level for indoor subscribers living in this area, a user-specific distribution of the resources shall be done according to the location environment of the user. In state-of-the-art network technologies, radio resource assignment and scheduling decisions are done according to service and user specific QoS requirements, traffic load and radio channel conditions. One objective of this invention is the extension of radio resource management algorithms by taking the actual user-specific environment into consideration and keeping the resources assigned to stationary indoor users above a specific sustenance level and scheduling weight, while the resources assigned to the outdoor users might fall below this sustenance level.

The amount of users and traffic load, represents in the present invention a further dimension for the separation of the settings of a parameter according to the user's and network's current environment.

### User-behaviour specific slicing of 5G resources

Network slicing in 5G networks allows a fast and efficient access for various service requirements. Separate slices can be configured for different applications and can dynamically be adjusted. For example, one slice offers short latency for autonomous driving or for machines and robots to operate without delay. Another slice is assigned to information and entertainment services for transmitting high resolution videos. This slice is configured for high peak throughput.

Depending on the user behaviour according to its data usage profile defined in this invention, an adaptation of the slice allocation shall be triggered. For this purpose, the classification into speed environments and location environments described in this invention shall be used in addition to the classification according to the data usage profile. This implies a further separation of the environments into the categories, speed environment, location environment, and data usage profile.

### F) Analysing and optimisation, preferably by Artificial Intelligence (AI)

According to the invention, after applying said specific values for parameterisation, a success rate of the applied values is determined and, on basis thereof, the specific values associated with the stored patterns are adapted accordingly in order to automatically optimise the used specific values.

There can be an AI system or another optimisation means for analysing the fading profile, Doppler shift, residence time in a cell as well as the speed measurements and configurations defined in section A and the criteria used for the analysis of the location environment defined in section B. FFT (section C) and a classification into profiles (section D) shall be done and the measures to be executed based on the user specific behaviour defined in section E shall be varied within a range defined by network planning aspects. For each connection, the applied criteria and shapes of path loss, timing advance, power command courses and the applied measures shall be analysed in combination with the success of the executed measure. Thus, the mobile network learns to adapt the measures on the success of its derived actions.

If a drop occurs during a handover procedure because the link to the previously serving cell could not be maintained until the end of the handover procedure, the system shall learn that the start of the handover procedure has to be initiated earlier and the radio condition related thresholds in Table 2 for triggering handover have to be set to higher values. Under consideration of the estimated speed of the UE and the fading, PL and TA profile before triggering the handover, the thresholds for triggering the handover procedure shall be optimised. Different criteria are used in today's mobile networks for triggering handover, e.g. receive level, receive quality, and difference or ratio of radio channel conditions between the serving and target cell. This handover triggering criterion shall be stored on a per event basis for selecting the right measure.

The AI system or another optimisation means shall calculate a better-suited threshold and trigger-time for initiating the handover procedure for the underlying profile. In an optimisation procedure, a fine-tuning of the calculated new thresholds shall be automatically done for similar profiles for future handovers. Thus, the profiles shall be classified into different patterns and the optimised handover thresholds shall be used in the network. The optimisation procedure, which may be AI based, is a continuous process and does not stop at this instance.

This means that mobile networks transfer from a cell specific parameterisation to a user-behaviour specific parametrisation using patterns for the classification into speed and location environments. The AI system or another optimisation means can always analyse the success of the executed measure and its performance and learn from its failures.

The AI system or another optimisation means shall automatically learn whether the UE is used in an indoor, outdoor, train, or car environment. For this purpose, patterns shall be used to classify the course of the path loss, fading profile, TA etc. into environments. The patterns shall be stored in a database and the mobile network shall be enabled to do the following procedure for every new established connection:
- Measuring the course of the PL, TA and fading profile, number of handovers and UE speed and classifying these input data into patterns.
- Identification of the user's data usage profile based on the service type of the currently executed data service.
- Accessing the database of the stored patterns and selecting a pattern with similar characteristics to that of the considered connection.
- To each pattern, specific offset values shall be stored as measures, e.g. handoverOffset1 and timeToTriggerOffset1 for the fast-speed environment. These offsets shall be added to the default parameter values.
- For the identified data usage profile, specific QoS settings and radio resource management parameter settings stored in the database shall be queried.
- The offsets and settings, respectively, shall be read from the database and the new thresholds shall be sent to the network entities and, if applicable, to the UE.

The assignment of UEs into environments according to the subscriber's current behaviour can be done in an auto-learning way that continuously improves its accuracy.

Fig. 12 shows the functional architecture of the device and procedures of the present invention. Preferentially, the available hardware of the existing mobile network entities UE, base station, and controller shall be used, as well as the existing hardware of network support tools and parts of their processor and memory capacity shall be used to operate the described procedure. The necessary hardware components comprise processors, memory units, a database and input/output units. These hardware components can be distributed among several entities.

The UE 200 performs downlink measurements of the receive level and Doppler shift and calculates the path loss. The UE performs the Fast Fourier Transform and classifies the sequence of measurements into patterns representing the environments defined in section A and B. The patterns are further processed in the mobile network and network supporting tools and stored in the database module 230. These downlink measurements are an optional part and considered as further embodiment of this invention, because it requires changes in the 3GPP standard to define the format and protocol for exchanging the measurement results with the network.

In uplink direction, measurements of the signals received from the considered UE are executed by the base station. The receiver module 210 and the transmitter module 220 are typically housed in the base station or in remote radio heads and the baseband processing is done in a separate hardware unit, e.g. the baseband board of the base station. Measurements of the receive level, timing advance, and Doppler shift are already done in state-of-the-art mobile networks. The new aspect is the classification into patterns and its post-processing. Optionally the Fast Fourier Transform is applied to support the classification of the measurements into patterns.

The innovative steps of this invention are executed in the database module 230, RAN parameter module 240, and Artificial Intelligence module 250. These modules can be housed in a separate hardware unit or can be part of the hardware of existing network entities or network supporting entities and use parts of their resources. The database module 230 shall store patterns that are based on uplink measurements done by the receive module enriched with the classification into patterns and optionally downlink measurements representing the user's current environments such as speed environment, location environment, and data usage profile. The database module also stores the applied measures, such as offset values or handover margins that have been executed for the corresponding pattern in the past. In case of updates of the applied measures as part of the optimisation procedure, the previous data shall be overwritten by new values as result of the continuously ongoing optimisation process.

New measured patterns shall be compared with existing patterns in the database. Matching criteria shall be defined and the consistency of a new pattern with an existing pattern shall be analysed. If the new pattern matches within a predefined maximum deviation range to one or more of the stored patterns, a refinement of the mapping shall be done taking into account further consistency checks between the new patterns based on several measurements such as fading profile and course of the TA. The best match shall be searched in the database. For the identified pattern in the database, the executed measure for this pattern shall be read from the database. The measure is for example an offset of 2 dB on the threshold for SRVCC from 4G to 3G. There are different implementation options for considering an offset:
1. In the first option the thresholds are defined for each environment combination as absolute values as described in Table 2 by value11, value12 etc. In this option, the environment of the UE is identified by searching a matching pattern in the database and the environment combination, e.g. environment 11 (ENV11) as shown in Table 2 is reported to the RAN parameter module 240 as the UE's current environment. The RAN parameter module is a further database in which the parameters of the mobile network are kept and modified. In case of a change of the value of a parameter, the updated value is either changed in the network entities or, in case of a UE parameter, sent via the transmitter module 220 to the UE 200 via broadcast messages or dedicated signalling. The last part, i.e. keeping parameter settings in a database, modification of settings for these parameters, and transfer to the nodes of the network and UE is state-of-the-art technology. The new aspect is the modification of a parameter on basis of profiles that are generated by measurements of the signals to and from a specific UE and the classification into specific environments according to the user's current behaviour.
2. A second option for implementation is the definition of offset values. A specific offset is defined as measure for a specific environment. The value of a parameter, e.g. THR_29 is modified by adding the offset stored in the database for the identified environment, e.g. the 2 dB offset is added to THR_29 (Fig. 2) and the SRVCC from 4G to 3G is triggered if RSRP < THR_29 + 2 dB or RSRQ < THR_30 is fulfilled for the 4G downlink signals received by the UE. A further measure stored in the database can be that an offset of 1 dB is defined for a further parameter, e.g. THR_30. If both offsets are configured, the SRVCC is triggered in this example, if the following condition is fulfilled: RSRP < (THR_29 + 2 dB) or RSRQ < (THR_30 + 1 dB). In implementation option 2, the offset is read from the database and the corresponding parameter in the RAN parameter module 240 is modified by adding this offset. The updated value of this parameter shall then be used on network side and UE side, respectively.

The AI module 250 or another optimisation unit shall evaluate the success of the applied measure and close the loop by modifying the values defined for each measure based on the success rate for the previous settings. For this purpose, the AI module 250 shall be equipped with a logical interface (a) to the network controller 280 and (b) to the performance monitoring entity 290. The network controller e.g. the RNC in 3G networks is connected to the NodeB. Call drops or radio link failures are counted by performance counters in the network controllers and transferred for monitoring and further processing to the performance monitoring entity 290. The information of a connection drop shall also be transferred from the network controller 280 to the AI module or another optimisation unit and shall be related to the applied measure, i.e. the report of the drop that occurred during or short time after a SRVCC shall also include the measures applied to the event SRVCC, the values used for THR_29, THR_30, time to trigger, and time to stop. Fig. 3 represents the typical periods for the different phases of the SRVCC procedure. The network entities have also knowledge, whether inter-RAT measurements were triggered due to violation of the receive level or receive quality criterion, or both. If the drop occurs during the execution phase 30 (Fig. 3), starting of inter-RAT measurements shall be done earlier. This can be achieved by either reducing the time to trigger, or by setting the thresholds for triggering inter-RAT measurements to a higher value. As consequence for the latter action, THR_29 shall be increased if inter-RAT measurements were triggered due to violation of the receive level criterion, THR_30 shall be increased if inter-RAT measurements were triggered due to violation of the receive quality criterion. If the drop already occurs during the measurement phase 20, THR_29 or THR_30, respectively, shall be increased more than for a drop during the subsequent SRVCC execution phase.

Evaluation of the success rate for the applied measures and updating the values of the defined measures in the database module 230 is a continuous process of the AI module. This means with each defined measure, the outcome shall be evaluated as part of the optimisation process. The AI module or another optimisation unit shall identify the optimum threshold for the considered environment, which means that additional input is necessary. A pure increase of THR_29 and THR_30, respectively, which in consequence leads to an earlier triggering of the SRVCC is not the optimum choice. The SRVCC might be triggered early enough to avoid that the UE leaves the 4G coverage area before finalisation of the SRVCC procedure, however also the time the UE is served in 4G might be considerably shorter than necessary. Typically, a newer technology provides better performance with respect to data or speech services. In this example of the speech call that executes a SRVCC from 4G to 3G, a 4G network supporting super-wideband and full-band with Enhanced Voice Services (EVS) can provide better speech quality than a 3G network supporting wideband speech.

In addition, the time the UE is allocated to a specific network technology, shall be measured. Both performance criteria shall be mapped on cost functions and combined via weighting factors. This procedure shall be used to identify the optimum trade-off between starting the SRVCC procedure in regions with sufficiently good 4G radio conditions and keeping the call as long as possible in 4G before SRVCC to 3G. The use of cost functions in the AI module or another optimisation unit allows a simple extension to further performance evaluation criteria.

### Assignment of occurring events to counter-measures

In the following, three examples for dropping events are explained and the related thresholds are described. According to the present invention, the AI module shall trigger a modification of the mentioned thresholds within a specific range defined by the operator, e.g. [-5 dB; 5 dB]. This limitation of the parameter modification allows the operator to control the extent of the applied measures.

### 1. Call drop of a fast moving subscriber short time after connection setup

The UE does not camp fast enough on the best suited cell. The transition from idle to connected mode is done in the technology the UE currently camps. After call setup in this technology, neighbouring cells of the same technology are first measured, before cells of other technologies are measured. For fast moving subscribers, the necessary measurement time might be too long and the connection drops before the inter-RAT handover is executed.

Parameter modification applied by the AI module or another optimisation unit: For the fast-speed environment, the cell re-selection timer shall be reduced and the thresholds for idle-mode mobility shall be increased. The related thresholds of the outgoing criteria from the higher network technology to the lower technology shown in Fig. 1 are THR_01 (level based cell re-selection criterion from 5G to 4G), THR_02 (quality based cell re-selection criterion from 5G to 4G), THR_7 (level based cell re-selection criterion for SRVCC from 4G to 3G), THR_12 (level based cell re-selection criterion for SRVCC from 4G to 2G), OFFSET_01 and OFFSET_02 (level based cell re-selection offsets from 3G to 2G), and THR_15 (quality level based cell re-selection criterion from 3G to 2G).

Consequence of the measure applied by the AI module or another optimisation unit: Faster and earlier cell re-selection prevents fast moving subscribers from the situation that a call is setup at poor radio channel conditions and the call drops short after setup because the fast moving subscriber leaves the coverage area of the serving technology already before a handover to another technology is finalised.

### 2. Call drop after an inter-frequency handover to another 3G frequency

In a poor coverage area, changing of the 3G frequency by inter-frequency intra-RAT handover does not improve the radio conditions in many cases. While stationary users or slow moving subscribers profit from being kept for a longer time in 3G, a handover to 2G is beneficial for fast moving subscribers. The measure to be executed by the AI module or another optimisation unit is the deactivation of 3G inter-frequency handovers for fast moving subscribers. This action avoids a delay of an inter-RAT handover, which is urgently necessary to maintain the connection.

Parameter modification applied by the AI module or another optimisation unit: Setting of the parameter for inter-frequency handovers to "deactivated" for the fast speed environment.

Consequence of the measure applied by the AI module or another optimisation unit: For fast-moving subscribers the inter-RAT handover is triggered earlier and not delayed by measuring inter-frequency neighbouring cells in the same technology.

### 3. Avoiding to keep bad cells in the Active Set

On motorways in a hilly terrain, typically several neighbouring cells radiate into the coverage area of the UE, rather than having one dominant serving cell. For network optimisation it is beneficial in this environment to keep only good neighbouring cells in the Active Set.

Parameter modification applied by the AI module or another optimisation unit: This goal is achieved by delaying the reporting of Event 1B for the fast-speed environment, i.e. by increasing the period between detection of event 1B and sending the measurement report. Additionally, the threshold and hysteresis values for Event 1B shall be optimised. It is the scope of the present invention to evaluate the handover and cell re-selection success rate. The handover success rate shall be analysed by starting a timer after execution of the handover. A handover is defined successful, if the call is still active after expiry of this timer and the call is still allocated in this target cell, i.e. a ping-pong handover back to the previous serving cell did not occur and also a handover to a third cell did not occur before expiry of the timer. The latter case indicates that the radio channel conditions in the target cell were not sufficiently good and a further handover was necessary. If a considered handover is not successful, e.g. due to ping-pong to the previous cell, the AI module or another optimisation unit shall modify for the considered fast-speed environment the currently defined settings for the trigger time for Event 1B, its threshold and hysteresis values within a range defined by the operator. This means:
1. The AI module or another optimisation unit identifies the environment classified for this user during handover procedure.
2. The AI module or another optimisation unit defines for this environment one of the three parameters described above for Event 1B (trigger time, threshold, and hysteresis) and starts with a first modification of this parameter, e.g. doubling of the trigger time.
3. The new setting shall be defined in the database as measure for this specific environment.
4. The new thresholds shall be set in the network and used by the UEs being identified for the same environment.
5. The handover success rate for connections having used this setting shall be analysed by the AI module or another optimisation unit for a defined period of time, e.g. several days.
6. After this performance analysing period, a further modification of the same - and in the next step of the next identified parameter - shall be applied for this environment and the performance shall be evaluated again.
7. The optimum settings of the three considered parameters shall be identified and stored in the database. A continuous optimisation process shall be run by the AI module or another optimisation unit.
   Consequence of the measure applied by the AI module or another optimisation unit: Increase of the reliability of target cells for handover in cells of missing dominant servers.

As a result, the invention deals with a device and a method for an individual parameterisation of mobile telecommunication systems, wherein at least one of the following aspects is considered:
- the device may comprise a processor, a memory unit with a database and an input/output unit,
- patterns can be used to classify the measured fading profile, Doppler shift, allocation time in a cell, speed measurements, path loss, timing advance, and receive level profile into UE specific environments,
- accumulated power control commands are considered to compensate the bias of receive level measurements and path loss estimations by power control,
- a speed related environment can be configured with the value range {slow; medium; fast}, wherein stationary UEs are mapped onto the slow-speed environment,
- a location related environment can be configured with the value range {indoor; outdoor; train: car},
- a data usage profile can be configured with the value range {conversational; streaming: interactive; background} or its QCI value,
- a further environment represents the cell and network condition of the user's current location, especially the current traffic load,
- a first environment can be sub-divided by a second environment and both can be further sub-divided by a third usage profile or environment, i.e. a specific UE is assigned to a combination of environments and classes,
- a Fast Fourier Transform can be applied to transform the time signal into the frequency domain and is used to support the classification of the user's behaviour in environments,
- the patterns for identifying the corresponding environment can be stored in a database,
- offset values or alternatively absolute parameter settings for each environment or combination of environments can be stored in this database,
- the patterns identified for an active connection can be compared with existing patterns in the database,
- if the pattern of an ongoing connection matches with pattern(s) stored in the database, the offset values or alternatively absolute values defined for the corresponding environment can be assigned to the considered active connection and new connections using this environment. An example is a 2 dB offset for the SRVCC from 4G to 3G for the fast-speed environment,
- the success of the applied measure can be evaluated and an optimisation of the parameter modifications is applied by further modifications of parameter settings and subsequent success evaluation,
- cost functions can be used for a multi-dimensional optimisation of parameter settings,
- the subscriber-behaviour parameterisation can refer to cell re-selection and handover related parameters, QoS settings and 5G slicing,

The focus of the present invention is not set to methods for detecting the speed of a UE, nor introduction of a speed-sensitive handover. Its scope is the utilisation of this information for the classification of the user's behaviour into specific profiles and environments to allow an individual, i.e. user-specific parameterisation of the mobile network based on parameter sets, offsets, and measures defined for each combination of environments.

### Abbreviations

- 2G: Second Generation
- 3G: Third Generation
- 3GPP: 3rd Generation Partnership Project
- 4G: Fourth Generation
- 5G: Fifth Generation
- AI: Artificial Intelligence
- CL: Closed-Loop
- DFT: Discrete Fourier Transform
- DL: Downlink
- Ec/No: Received Energy per Chip divided by the Power Density in the Band
- E-GPRS: Enhanced General Packet Radio Service
- eNodeB: Evolved Node B (LTE base station)
- ENV: Environment
- E-OTD: Enhanced Observed Time Difference
- EVS: Enhanced Voice Services
- FFT: Fast Fourier Transform
- GPRS: General Packet Radio Service
- GPS: Global Positioning System
- GSM: Global System for Mobile Communications
- loT: Internet of Things
- LTE: Long Term Evolution
- LTE-A: Long Term Evolution Advanced
- M2M: Machine to Machine
- MHA: Mast Head Amplifier
- NodeB: 3G Base Station
- OL: Open-Loop
- O&M: Operation and Maintenance
- PC: Power Control
- PCU: Packet Control Unit
- PDP: Packet Data Protocol
- PL: Path Loss
- QCI: Quality of Service Class Identifier
- QoS: Quality of Service
- RAB: Radio Access Bearer
- RAN: Radio Access Network
- RAT: Radio Access Technology
- RNC: Radio Network Controller
- RRC: Radio Resource Control
- RSCP: Received Signal Code Power
- RSRP: Reference Signal Received Power
- RSRQ: Reference Signal Received Quality
- Rx: Receive
- RxLEV: Receive Level
- RxQUAL: Receive Quality
- SGSN: Serving GPRS Support Node
- SIB: System Information Broadcast
- Squal: Cell selection quality value
- SRVCC: Single Radio Voice Call Continuity
- Srxlev: Cell selection receive level value
- SS-RSRP: Synchronization Signal Reference Signal Received Power
- SS-RSRQ: Synchronization Signal Reference Signal Received Quality
- TA: Timing Advance
- TOA: Time of Arrival
- TTS: Time To Stop
- TTT: Time To Trigger
- UE: User Equipment
- UL: Uplink
- UMTS: Universal Mobile Telecommunications System
- UTRAN: UMTS Terrestrial Radio Access Network

## Claims

1. Method for defining and setting parameters in a cellular mobile communication network, in particular for setting parameters being used for performing and/or triggering a handover or cell re-selection routine, wherein the method comprises the following steps:
detecting at least one characteristic information of a user equipment, i.e. UE,
classifying the UE on basis of said at least one characteristic information into a specific one of a plurality of user profiles, and
setting specific parameters in the cellular mobile communication network individually for said UE on basis of its user profile, preferably setting UE specific parameters which are used for performing and/or triggering a handover or cell re-selection routine and/or radio resource management on basis of the UE's user profile.

2. The method of claim 1, wherein detecting the characteristic information of a UE comprises at least the estimation of the UE's speed by performing at least one of the following steps:
a) detecting a fading profile of the signal received by a base station, i.e. BS, in uplink and/or of the signal received by a UE in downlink,
b) detecting the Doppler shift occurring when sending signals between the BS and the UE or vice versa,
c) detecting the number of cell changes made by the UE in an immediately preceding period of time, preferably wherein a cell change is considered, i.e. a cell re-selection procedure during idle mode of a UE and/or a handover during connected mode of the UE,
d) detecting positioning data of the UE in order to estimate the actual speed of the UE, wherein the positioning data are obtained by a positioning system, e.g. by GPS, Galileo, Beidou or GLONASS, and/or are obtained by triangulation technologies evaluating the propagation delays of a signal between the UE and several base stations, and
e) detecting a fixed definition of the speed of the UE defined during an installation and configuration procedure of the UE, or wireless module, respectively.

3. The method of claim 2, wherein, after estimating the UE's speed, the UE is classified into one of a plurality of predefined speed environments, preferably wherein the UE is classified between at least two of the following speed environments of fast, medium, slow and/or static.

4. The method of any one of the preceding claims, wherein detecting the characteristic information of a UE comprises the estimation of the UE's location environment by performing at least one of the following steps:
a) detecting a change of the path loss during a preceding period of time between a signal connection of UE and BS or vice versa,
b) detecting a change of the timing advance during a preceding period of time between a signal connection of UE and BS or vice versa, and
c) detecting a change of the receive level during a preceding period of time between a signal connection of UE and BS or vice versa.

5. The method of claim 4, wherein, when estimating the UE's location environment, the UE is classified into one of a plurality of predefined location environments, preferably wherein the UE is classified between at least two of the following location environments of indoor, outdoor, car and/or train.

6. The method of any one of the preceding claims, wherein detecting the characteristic information of a UE comprises the estimation of the UE's data usage profile preferably by using the Quality of Service (QoS) attribute Traffic Class or the Quality of Service Class Identifier (QCI).

7. The method of claim 6, wherein, when estimating the UE's data usage profile, the UE is classified into one of a plurality of predefined data user profiles, preferably wherein the UE is classified between at least two of the following data usage profiles of conversational, streaming, interactive and/or background or the relevant QCI.

8. The method of any one of the preceding claims, wherein a Fourier Transform, preferably a Fast Fourier Transform, is applied to each of a detected fading profile signal, a detected Doppler shift signal, a detected path loss signal and/or a detected timing advance signal in order to use the characteristic shape of the respective Fourier-transformed signal for classifying the user's current behaviour into speed environment classes and location environment classes.

9. The method of claim 8, wherein for classifying the user's current behaviour patterns are stored supporting an identification of the corresponding speed environment and/or location environment, and preferably
the stored patterns are associated with specific values for parameterisation of the network for said UE.

10. The method of claim 9, wherein after applying said specific values for parameterisation, a success rate of the applied values is determined and, on basis thereof, the specific values associated with the stored patterns are adapted accordingly in order to automatically optimise the used specific values.

11. The method of any one of the preceding claims, wherein for each one of a plurality of user profiles, preferably depending on a combination of user specific environments, a specific value or a specific set of values is used for the parameterisation of the communication network being valid only for said UE.

12. The method of any one of the preceding claims, wherein setting specific parameters in the cellular mobile communication network individually for said UE comprises the setting of at least one of the following:
a) a trigger time of a handover or cell re-selection procedure,
b) a handover or cell re-selection threshold,
c) a hysteresis for avoiding an immediate subsequent handover process, and/or
d) radio resource management decisions including but not limited to resource allocation, scheduling, and slice adaptation.

13. A cellular mobile communication network, comprising means for performing the method of any one of the claims 1 - 12, comprising preferably:
measurement means for measuring the uplink/downlink receive level, the timing advance, the Doppler shift and/or the path loss of a connection between a base station and a UE,
classification means for classifying the measured signals into at least one of a plurality of patterns, and
parameter setting means for setting parameters of the network for said UE on basis of the patterns into which the measured signals were classified.

14. The network of claim 13, further comprising a database for storing the plurality of patterns being associated with specific parameter settings to be applied for said UE.

15. The network of claim 13 or 14, further comprising optimisation means for evaluating the applied network settings for said UE, preferably the optimisation means being further adapted to change the parameters associated with a pattern depending on the evaluated applied network settings.
